# EUROPÄISCHE PATENTANMELDUNG

(11) **EP 1 114 985 A1**
(43) Veröffentlichungstag der Anmeldung: **11.07.2001**
(21) Anmeldenummer: 00126953.9
(22) Anmeldetag: 08.12.2000
(51) Int. Cl.: G01F 1/684

(54) **Thermischer Durchflussaufnehmer**

(30) Priorität: 13.12.1999 LU 90485
(71) Anmelder: Delphi Technologies, Inc., Troy, MI 48007 (US)
(72) Erfinder: Weyand, Peter, 8064 Bertrange (LU)
(74) Vertreter: Beissel, Jean

(57) **Zusammenfassung**

Massendurchflußmesser (10) mit einem Substrat (12), einer auf dem Substrat (12) angeordneten Membranschicht (16) aus einem geeigneten dielektrischen Material und eine auf der Membranschicht (16) angeordnete Elektrodenstruktur (18). Erfindungsgemäß weist der Massendurchflußmesser eine zwischen dem Substrat (12) und der Membranschicht (16) angeordneten Abstandsschicht (14) einer Dicke d auf, wobei die Abstandsschicht (14) in einem Bereich unterhalb der Elektrodenstruktur (18) durch selektives Ätzen entfernt ist, so daß in diesem Bereich unter der Membranschicht (16) ein Hohlraum (26) ausgebildet wird und die Membranschicht (16) eine Membran (32) ausbildet, die den Hohlraum (26) überspannt, und wobei die Dicke (d) der Abstandsschicht (14) derart gewählt ist, daß die durch die Membranschicht (16) ausgebildete Membran (32) bei einer Durchbiegung an einer unteren Begrenzungsfläche des Hohlraums (26) anzuliegen kommt.

## Beschreibung

### Einleitung

Die vorliegende Erfindung betrifft einen Massendurchflußmesser und ein Verfahren zur Herstellung eines derartigen Massendurchflußmessers.

Derartige Massendurchflußmesser werden beispielsweise in elektronischen Kraftstoffeinspritzanlagen von Verbrennungsmotoren eingesetzt, um die Masse der zugeführten Luft messen und so das Verhältnis Kraftstoff/Luft bestimmen zu können. Die hier eingesetzten Massendurchflußmesser sind üblicherweise in Siliziumtechnik aufgebaut und umfassen eine Elektrodenstruktur mit u.a. einem oder mehreren durch einen elektrischen Strom heizbaren Heizelement(en), das (die) auf einer dünnen Membran aufgebracht ist (sind). Die Temperatur des Heizelementes hängt von dem Heizstrom und von der von dem Heizelement abgeführten Wärmemenge ab. Letztere hängt wiederum von den thermischen Eigenschaften des Gases und seiner Fließgeschwindigkeit entlang des Heizelementes ab. Das an der Membran vorbeiströmende Gas verändert die Temperaturverteilung auf der Membran. So kühlt sich beispielsweise der Bereich vor dem Heizelement mit zunehmender Strömung ab. In Strömungsrichtung vor und hinter dem Heizelement sind daher jeweils eine oder mehrere Sensorelektroden auf der Membran angeordnet, die die Temperatur der Membran messen und somit ein Maß für die Strömung liefern. Alternativ kann die Menge des vorbeiströmenden Gases beispielsweise anhand der Temperatur des Heizelementes bei konstantem Heizstrom oder anhand des Heizstroms bestimmt werden, der benötigt wird, um das Heizelement auf einer konstanten Temperatur zu halten.

Da die Membran, auf der die Elektrodenstruktur aufgebracht ist, durch das Heizelement mit aufgeheizt wird, bestimmen die Geometrie, die Dicke und die Materialeigenschaften der Membran die Eigenschaften des Durchflußmessers, wie z.B. das Signal, die Dynamik oder das Ansprechverhalten des Massendurchflußmessers. Aus diesem Grund ist es angebracht, die Membran möglichst dünn auszugestalten um den Einfluß ihrer Wärmekapazität auf das Meßergebnis zu minimieren.

Um eine solche dünne Membran herzustellen, wird üblicherweise eine Schicht von einigen um Dicke aus einem geeigneten dielektrischen Material, z.B. SiO₂, Si₃N₄ oder SiOₓN_{y}, auf ein Siliziumsubstrat mit einer Stärke von mehreren hundert pm aufgebracht. Auf diese Membranschicht wird die Elektrodenstruktur mittels einer geeigneten Technik aufgebracht. Im Bereich der Elektrodenstruktur wird anschließend auf der Rückseite das Si-Substrat selektiv weggeätzt, so daß in diesem Bereich lediglich die Membranschicht mit der aufgebrachten Elektrodenstruktur bestehen bleibt. Das so hergestellte Element wird anschließend in ein Trägerelement eingesetzt, wobei der unter der Membran in Bereich der Elektrodenstruktur entstandene Hohlraum verschlossen wird.

Auf diese Weise können ohne weiteres Massendurchflußmesser hergestellt werden, deren Membran eine Dicke von lediglich 1 µm aufweist. Ein derartiger Massendurchflußmesser weist zwar ein hervorragendes Ansprechverhalten auf, allerdings ist aufgrund der geringen Membrandicke, die Membran extrem empfindlich gegen Zerstörung durch auftreffende Partikel aus dem Luftstrom oder durch Druckstöße, die beim Verbrennungsmotor beispielsweise durch Rückzündungen in die Sauganlage ("Saugrohrpatscher") entstehen.

### Aufgabe der Erfindung

Aufgabe der vorliegenden Erfindung ist es folglich, einen Massendurchflußmesser vorzuschlagen, der gegen Zerstörung weniger empfindlich ist.

### Allgemeine Beschreibung der Erfindung

Diese Aufgabe wird gelöst durch einen Massendurchflußmesser mit einem Substrat, einer auf dem Substrat angeordneten Membranschicht aus einem geeigneten dielektrischen Material und eine auf der Membranschicht angeordnete Elektrodenstruktur. Die Elektrodenstruktur umfaßt dabei z.B. eine Heizelektrode sowie mindestens zwei Meßelektroden, von denen jeweils mindestens eine stromaufwärts und stromabwärts in einem gewissen Abstand von der Heizelektrode angeordnet ist. Erfindungsgemäß weist der Massendurchflußmessers eine zwischen dem Substrat und der Membranschicht angeordneten Abstandsschicht einer Dicke d auf, wobei die Abstandsschicht in einem Bereich unterhalb der Elektrodenstruktur durch selektives Ätzen entfernt ist, so daß in diesem Bereich unter der Membranschicht ein Hohlraum ausgebildet wird und die Membranschicht eine Membran ausbildet, die den Hohlraum überspannt, und wobei die Dicke d der Abstandsschicht derart gewählt ist, daß die durch die Membranschicht ausgebildete Membran bei einer Durchbiegung an einer unteren Begrenzungsfläche des Hohlraums anzuliegen kommt.

Bei dem vorliegenden Massendurchflußmesser ist die Ausdehnung des Hohlraums senkrecht zum Schichtenverlauf des Massendurchflußmessers und damit der Abstand der gebildeten Membran von der darunterliegenden Substratoberfläche derart bemessen, daß die Membran an die untere Begrenzungsfläche anzuliegen kommt, bevor die Spannungen im Inneren der Membran einen kritischen Wert übersteigen und zu einer Zerstörung der Membran führen. In anderen Worten, die Durchbiegung der in dem Bereich der Elektrodenstruktur ausgebildeten Membran kann durch eine geeignete Ausgestaltung des unter der Membran gebildeten Hohlraums begrenzt werden. Dies geschieht durch eine einfache Anpassung der Dicke der Abstandsschicht an die Dicke, die laterale Abmessungen (Spannweite) und die Materialeigenschaften der Membran. Soll die Membran beispielsweise eine sehr geringe Spannweite aufweisen, wird lediglich die Dicke der Abstandsschicht entsprechend verringert, so daß der entstehende Hohlraum eine an die Materialeigenschaften der Membran angepaßte Tiefe aufweist.

Wird die Membran z.B. durch das Auftreffen eines Partikels aus dem Luftstrom oder durch einen Druckimpuls einer starken Durchbiegung unterworfen, legt sich die Membran an die untere Begrenzungsfläche des Hohlraums an und kann sich nun nicht weiter verformen. Auf diese Weise kann bei geeigneter Ausgestaltung ein Bersten der Membran wirksam verhindert werden. Es können also auf diese Weise Massendurchflußmesser mit besonders gutem Ansprechverhalten hergestellt werden, die trotz sehr geringer Membranstärken eine verminderte Anfälligkeit gegen Zerstörung der Membran und damit eine erhöhte Lebensdauer aufweisen. Solche Massendurchflußmesser weisen beispielsweise eine Membranstärke von 0.5 bis 5 µm bei einer Hohlraumtiefe von 1 µm bis über 10 µm auf. Die Spannweite der Membran kann dabei von weniger als 100 µm bis zu mehreren mm betragen.

Die Abstandsschicht umfaßt vorzugsweise eine Ätzstopschicht aus einem gegenüber dem selektiven Ätzen inerten Material, wobei das gegenüber dem selektiven Ätzen inerte Material in dem Bereich unterhalb der zu erzeugenden Membran durch ein selektiv ätzbares Material ersetzt wurde. Das selektiv ätzbare Material wird dann nach dem Aufbringen der Membranschicht durch selektives Ätzen wiederum entfernt, wobei das inerte Material eine Ausbreitung des Ätzvorgangs seitlich begrenzt und folglich die Formgebung des Hohlraums quer zum Schichtenverlauf bestimmt. Diese Technik ermöglicht es, dem unter der Membran ausgestalteten Hohlraum parallel zum Schichtenverlauf jede beliebige Form zu geben. Er kann beispielsweise rechteckig oder rund ausgestaltet sein.

Bezüglich der Ausdehnung des Hohlraums parallel zum Schichtenverlauf gilt: je größer der Hohlraum, d.h. je größer die Spannweite der Membran, desto weniger Durchbiegekräfte werden benötigt, um die Membran an die untere Begrenzungsschicht des Hohlraums anzupressen. Es kann daher vorteilhaft sein, die Abstandsschicht in mehreren Bereichen unterhalb der Elektrodenstruktur zu entfernen, so daß mehrere nebeneinander angeordnete Hohlräume ausgebildet werden. Auf diese Weise wird ein Massendurchflußmesser hergestellt, der ein hohes Ausgangssignal liefert, ohne daß eine erhöhte Empfindlichkeit gegenüber Druckstößen auftritt.

Die Herstellung eines derartigen Massendurchflußmessers erfolgt vorzugsweise in einem Verfahren mit den folgenden Schritten:
a) Aufbringen einer Abstandsschicht auf ein Substrat,
b) Aufbringen einer Membranschicht aus einem geeigneten dielektrischen Material auf die Abstandsschicht,
c) Aufbringen einer Elektrodenstruktur auf die Membranschicht, und
d) Entfernen der Abstandsschicht in einem Bereich unterhalb der Elektrodenstruktur durch selektives Ätzen der Abstandsschicht, wobei in diesem Bereich unter der Membranschicht ein Hohlraum ausgebildet wird und die Membranschicht eine Membran ausbildet, die den Hohlraum überspannt,
wobei die Dicke d der Abstandsschicht derart ist, daß die durch die Membranschicht ausgebildete Membran bei einer Durchbiegung an einer unteren Begrenzungsfläche des Hohlraums anzuliegen kommt.

Da die zu entfernende Abstandsschicht nach dem Aufbringen der Membranschicht und der Elektrodenstruktur nicht mehr direkt zugänglich ist, erfolgt das Entfernen der Abstandsschicht durch selektives Ätzen durch Ätzkanäle, die sich von der Abstandsschicht durch die Membranschicht hindurch bis an die Oberfläche des Massendurchflußmessers erstrecken. Dieses "surface micromachining" genannte Verfahren, bei der eine tieferliegende Schicht durch Ätzkanäle in einer darüberliegendem Schicht selektiv entfernt wird, erlaubt die Herstellung feinster Strukturen innerhalb einer gegebenen Schichtfolge.

Da bei diesem Verfahren das Substrat nicht an einer Stelle entfernt wird, besitzt das hergestellte Element darüber hinaus eine sehr hohe Gesamtfestigkeit, die eine arbeitsaufwendige Montage in einer Tragstruktur erübrigen. Hinzu kommt, daß der Hohlraum des erfindungsgemäßen Massendurchflußmessers durch seine Herstellungsweise automatisch an seiner unteren Seite verschlossen ist. Ein späteres Verschließen des Hohlraums, das bei den bisher bekannten Massendurchflußmessern erfolgte, ist demnach ebenfalls nicht mehr notwendig.

Der vorgestellte Massendurchflußmesser ist demnach gegenüber den herkömmlichen Massendurchflußmessern einfacher und kostengünstiger herzustellen.

Um die laterale Formgebung des gebildeten Hohlraums gezielt steuern zu können, umfaßt das Aufbringen der Abstandsschicht vorzugsweise folgende Schritte:
a) Aufbringen einer Ätzstopschicht aus einem gegenüber dem selektiven Ätzen inerten Material;
b) Entfernen des gegenüber dem selektiven Ätzen inerten Materials in dem Bereich unterhalb der zu erzeugenden Membran, wobei eine Ausnehmung in der Ätzstopschicht ausgebildet wird;
c) Einbringen eines selektiv ätzbaren Materials in die Ausnehmung in der Ätzstopschicht.

Beim späteren selektiven Entfernen der Abstandsschicht in dem Bereich unterhalb der Elektrodenstruktur wird dann lediglich das selektiv ätzbare Material entfernt, wobei das inerte Material eine Ausbreitung des Ätzvorgangs quer zum Schichtenverlauf des Massendurchflußmessers begrenzt und folglich die Formgebung des Hohlraums in seitlicher Richtung bestimmt. Diese Technik ermöglicht es, dem unter der Membran ausgestalteten Hohlraum parallel zum Schichtenverlauf jede beliebige Form zu geben.

Es ist anzumerken, daß für die Herstellung einer Membran durch "surface micromachining" allgemein Polysilizium verwendet wird, das auf eine Abstandsschicht aus SiO₂ aufgebracht wird. Das SiO₂ läßt sich durch HF leicht ätzen, ohne daß die Polysiliziumschicht angegriffen wird. In dem vorliegenden Fall eignet sich Polysilizium jedoch wegen seiner hohen thermischen und elektrischen Leitfähigkeit nicht als Membranmaterial. Für den Einsatz in dem erfindungsgemäßen Massendurchflußmesser muß daher ein anderer Ansatz gefunden werden. So können beispielsweise Schichten aus SiO₂, Si₃N₄ oder SiOₓN_{y}, die auf eine leicht ätzbare Metallschicht, z.B. aus Aluminium, aufgetragen werden, sehr gute Ergebnisse liefern. Diese Schichten führen zu Membraneigenschaften, die mit denen einer nach der herkömmlichen Herstellungsmethode hergestellten Membran vergleichbar sind.

In einer bevorzugten Ausgestaltung des Massendurchflußmessers herrscht in dem Hohlraum ein Vakuum. Hierdurch kann eine optimale thermische Isolierung der Membran gegenüber dem Substrat erreicht werden. Das Vakuum entsteht vorzugsweise in einem Verfahrensschritt, in dem eine Passivierungsschicht unter Vakuum auf die Membranschicht und die darauf aufgebrachte Elektrodenstruktur abgeschieden wird. Hierbei werden gleichzeitig die Ätzkanäle versiegelt, so daß ein stabiles Hochvakuum über die gesamte Lebensdauer des Massendurchflußmessers gewährleistet werden kann.

Vorzugsweise weist der Massendurchflußmesser eine zwischen dem Substrat und der Abstandsschicht angeordneten dritte Schicht aus einem gegenüber dem selektiven Ätzen inerten Material auf. Diese dritte Schicht wird beispielsweise vor dem Aufbringen der Abstandsschicht auf das Substrat aufgebracht. Die dritte Schicht dient bei dieser Ausgestaltung als Ätzbarriere. Es ist anzumerken, daß in diesem Fall die dritte Schicht zum Substrat zu zählen ist und die Membran bei einer ausreichenden Durchbiegung folglich an die dritte Schicht anzuliegen kommt.

In einer weiteren vorteilhaften Ausgestaltung sind die Unterseite der Membranschicht und die Oberseite des Substrats bzw. der dritten Schicht in dem Bereich des Hohlraums mit einer Metallisierung versehen, wobei jede der Metallisierungen über eine geeignete Anschlußleitung von außerhalb des Massendurchflußmessers her kontaktierbar ist. Die Metallisierungen wirken als Elektroden eines Plattenkondensators, dessen Kapazität von dem Abstand der beiden Metallisierungen zueinander abhängt. Durch Messen der Kapazität dieses Kondensators kann man demnach Aufschlüsse über die Durchbiegung der Membran und somit über die Druckverhältnisse in der direkten Umgebung des Massendurchflußmessers gewinnen.

Auf diese Weise ist es folglich möglich, eine zusätzliche Funktion in den Massendurchflußmessers zu integrieren und neben dem Luftmassenstrom auch den Differenzdruck zwischen Hohlraum und Umgebung zu messen. Es wird bei dem oben beschriebenen Einsatz in der Einspritzanlage eines Verbrennungsmotors hierdurch möglich, beispielsweise den Druck im Ansaugtrakt bei laufendem Motor mit dem Druck bei Motorstillstand zu vergleichen und hierdurch Rückschlüsse auf den Druckverlust im Luftfilter des Fahrzeugs zu ziehen. Steigt dieser Druckverlust im Laufe der Zeit an, deutet dies auf eine Verschmutzung des Luftfilters hin. Bei Überschreiten eines zulässigen Schwellwertes für den Druckverlust kann dieser Zustand beispielsweise über eine Kontrolleuchte angezeigt werden. Es ist demnach möglich, die Austauschintervalle für den Luftfilter direkt von dessen Verschmutzungsgrad abhängig zu machen.

Es ist anzumerken, daß der Massendurchflußmesser vorzugsweise eine Schutzschicht aufweist, die auf die Elektrodenstruktur und die Membranschicht aufgebracht ist.

### Beschreibung anhand der Figuren

Im folgenden wird nun eine Ausgestaltung der Erfindung anhand der beiliegenden Figuren beschrieben. Es zeigen:
- Fig.1:: einen Schnitt durch eine besonders einfache Ausgestaltung eines Massendurchflußmessers;
- Fig.2:: einen Schnitt durch eine Ausgestaltung eines Massendurchflußmessers mit Druckmeßfunktion;
- Fig.3:: eine Draufsicht auf eine Ausgestaltung des Massendurchflußmessers mit mehreren Hohlräumen.

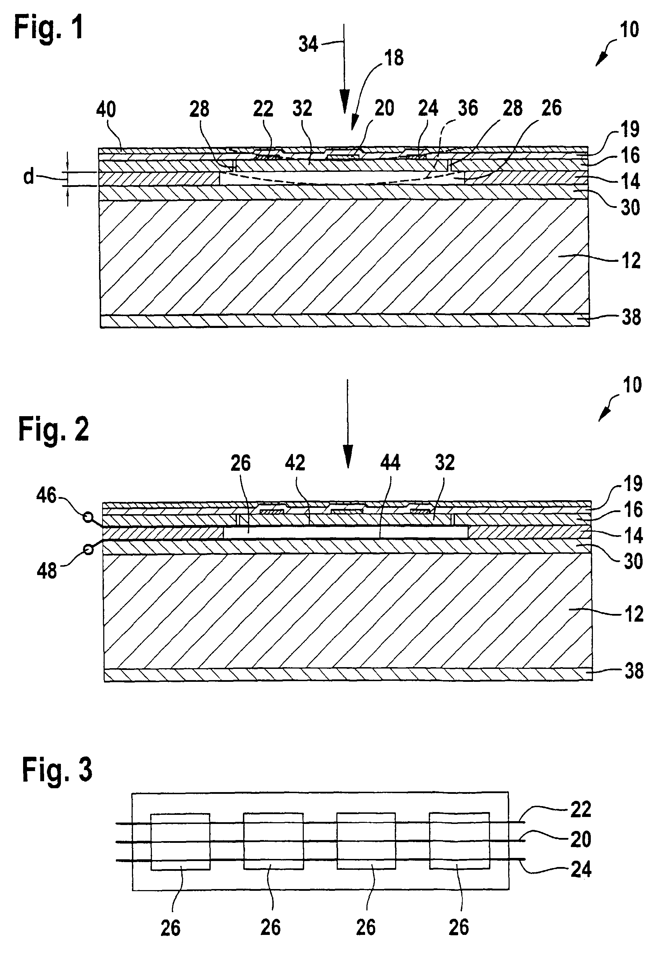

In Fig. 1 ist ein Schnitt durch eine erste Ausgestaltung eines Massendurchflußmessers 10 dargestellt. Dieser Massendurchflußmesser 10 umfaßt ein Substrat 12, auf den eine Abstandsschicht 14aufgebracht ist. Die Abstandsschicht 14 umfaßt vorzugsweise eine Ätzstopschicht aus einem gegenüber dem selektiven Ätzen inerten Material. Ein Teil dieser Ätzstopschicht wird per Maske und Ätzen entfernt, so daß in der Abstandsschicht eine Ausnehmung ausgebildet wird. Die Form dieser Ausnehmung bestimmt später die Form des unter der Membran gebildeten Hohlraums. Die Ausnehmung wird anschließend mit einem selektiv ätzbaren Material wie z.B. Aluminium verfüllt.

Auf die so gebildete Abstandsschicht 14 ist eine Schicht aus einem membrantauglichen Material 16, z.B. aus SiO₂, Si₃N₄ oder SiOₓN_{y}, aufgebracht, auf der ihrerseits eine Elektrodenstruktur 18 angeordnet ist. Über diese Elektrodenstruktur 18 und die Membranschicht 16 ist eine Schutzschicht 19 aufgebracht, die die Elektrodenstruktur 18 vor Umwelteinflüssen schützen soll.

Die Elektrodenstruktur 18 umfaßt ein Heizelement 20, sowie zwei oder mehr Meßelektroden 22 und 24, von denen jeweils mindestens eine stromaufwärts und stromabwärts in einem gewissen Abstand von dem Heizelement 20 angeordnet ist. Im Betrieb wird das Heizelement 20 mit einem elektrischen Strom geheizt und die Temperatur der von dem Gasstrom gekühlten Membran vor und nach dem Heizelement mittels der beiden Meßelektroden 22 und 24 gemessen. Anhand der verschiedenen Membrantemperaturen kann dann die Menge des Gases bestimmt werden.

Unterhalb der Elektrodenstruktur 18 ist das in die Ausnehmung der Abstandsschicht 14 verfüllte selektiv ätzbare Material entfernt, so daß in diesem Bereich ein Hohlraum 26 entsteht. Das Entfernen des selektiv ätzbaren Materials der Abstandsschicht 14 in dem Bereich geschieht dabei vorzugsweise durch ein "surface micromachining" genanntes Verfahren, bei der das Aluminium durch Ätzkanäle 28, die sich durch die Membranschicht nach oben hin erstrecken, selektiv weggeätzt wird. Um den Ätzvorgang zum Substrat 12 hin zu begrenzen, kann dabei zwischen dem Substrat 12 und der Abstandsschicht 14 eine Schicht 30 aus einem gegenüber dem selektiven Ätzen inerten Material angeordnet sein. Diese Ätzstopschicht 30 verhindert wirksam eine Ausbreitung des entstehenden Hohlraums 26 zum Substrat 12 hin.

Der Hohlraum 26 ist an seiner Oberseite durch die Membranschicht 16 überspannt, die demnach in diesem Bereich eine Membran 32 ausbildet, auf der die Elektrodenstruktur 18 angeordnet ist. Die Tiefe des Hohlraums 26, d.h. seine Ausdehnung senkrecht zur Schichtfolge, wird durch die Dicke d der Abstandsschicht 14 bestimmt. Diese ist derart gewählt, daß die Membran 32 bei einer Durchbiegung infolge eines Druckstoßes oder eines auftreffenden Partikels (dargestellt durch den Pfeil 34) an die untere Begrenzungsfläche des Hohlraums, in dem vorliegenden Fall an die Ätzstopschicht 30, anzuliegen kommt, bevor die Spannungen in der Membran 32 zu ihrer Zerstörung führen. Dies ist in Fig. 1 gestrichelt dargestellt (Referenzzeichen 36).

Es ist anzumerken, daß das Substrat an seiner Unterseite vorzugsweise ebenfalls mit einer Passivierungsschicht 38 versehen ist, und daß über der Membranschicht 16, die die Elektrodenstruktur 18 trägt, ebenfalls eine Passivierungsschicht 19 aufgebracht ist, welche die Ätzkanäle luftdicht verschließt und so ein Eindringen von Luft in den Hohlraum 26 verhindert. Über der Passivierungsschicht 19 kann vorteilhaft eine Ausgleichsschicht 40 aufgebracht sein, die Unebenheiten der Schutzschicht ausgleicht und so die Bildung von Verwirbelungen im Luftstrom verhindert.

Bei der in Fig. 2 dargestellten Ausgestaltung eines Massendurchflußmessers 10 handelt es sich um einen Massendurchflußmesser mit Druckmeßfunktion. Bei dieser Ausgestaltung sind die Unterseite der Membran 32 und die Oberseite der Ätzstopschicht 30 im Bereich der Elektrodenstruktur jeweils mit einer Metallisierung 42 bzw. 44 versehen. Jede der Metallisierungen 42 und 44 ist dabei über eine geeignete Anschlußleitung 46 bzw. 48 von außerhalb des Massendurchflußmessers 10 kontaktierbar. Die Metallisierungen 42 und 44 wirken als Elektroden eines Plattenkondensators, dessen Kapazität von dem Abstand der beiden Metallisierungen 42 und 44 zueinander abhängt. Durch Messen der Kapazität dieses Kondensators kann man demnach Aufschlüsse über die Durchbiegung der Membran und somit über die Druckverhältnisse in der direkten Umgebung des Massendurchflußmessers gewinnen.

Fig. 3 zeigt eine Draufsicht auf eine Ausgestaltung des Massendurchflußmessers 10 mit mehreren Hohlräumen. Bei dieser Ausgestaltung ist die Abstandsschicht unterhalb der Elektrodenstruktur in mehreren nebeneinanderliegenden Bereichen entfernt worden, so daß mehrere in Längsrichtung des Heizelementes 20 bzw. der Meßelektroden 22 und 24 nebeneinander angeordnete Hohlräume 26 entstehen. Dieser Massendurchflußmesser weist demnach eine große aktive Fläche auf, die aus mehreren Membranen mit jeweils einer geringen Ausdehnung zusammengesetzt ist. Ein solcher Massendurchflußmesser 10 weist ein sehr hohes Ausgangssignal auf, ohne daß dabei die Ausdehnung der einzelnen Membran eine kritische Größe überschreiten muß.

## Patentansprüche

1. Massendurchflußmesser (10) mit einem Substrat (12), einer auf dem Substrat (12) angeordneten Membranschicht (16) aus einem geeigneten dielektrischen Material und eine auf der Membranschicht (16) angeordnete Elektrodenstruktur (18), gekennzeichnet durch eine zwischen dem Substrat (12) und der Membranschicht (16) angeordneten Abstandsschicht (14) einer Dicke d, wobei die Abstandsschicht (14) in einem Bereich unterhalb der Elektrodenstruktur (18) durch selektives Ätzen entfernt ist, so daß in diesem Bereich unter der Membranschicht (16) ein Hohlraum (26) ausgebildet wird und die Membranschicht (16) eine Membran (32) ausbildet, die den Hohlraum (26) überspannt, und wobei die Dicke (d) der Abstandsschicht (14) derart gewählt ist, daß die durch die Membranschicht (16) ausgebildete Membran (32) bei einer Durchbiegung an einer unteren Begrenzungsfläche des Hohlraums (26) anzuliegen kommt.

2. Massendurchflußmesser nach Anspruch 1, dadurch gekennzeichnet, daß die Abstandsschicht (14) eine Ätzstopschicht aus einem gegenüber dem selektiven Ätzen inerten Material umfaßt, wobei das gegenüber dem selektiven Ätzen inerte Material in dem Bereich unterhalb der zu erzeugenden Membran durch ein selektiv ätzbares Material ersetzt wurde.

3. Massendurchflußmesser nach Anspruch 1 oder 2, dadurch gekennzeichnet, daß die Abstandsschicht (14) in mehreren Bereichen unterhalb der Elektrodenstruktur (18) durch selektives Ätzen entfernt ist, so daß in diesen Bereich unter der Membranschicht (16) mehrere nebeneinanderliegende Hohlräume (26) ausgebildet werden.

4. Massendurchflußmesser nach einem der Ansprüche 1 bis 3, dadurch gekennzeichnet, daß in dem Hohlraum bzw. in den Hohlräumen (26) ein Vakuum herrscht.

5. Massendurchflußmesser nach einem der vorhergehenden Ansprüche, gekennzeichnet durch einer zwischen dem Substrat (12) und der Abstandsschicht (14) angeordneten dritten Schicht (30) aus einem gegenüber dem selektiven Ätzen inerten Material.

6. Massendurchflußmesser nach einem der vorherigen Ansprüche, dadurch gekennzeichnet, daß in dem Bereich des Hohlraums (26) die Unterseite der Membranschicht (16) und die Oberseite des Substrats (12) bzw. der dritten Schicht (30) mit einer Metallisierung (42, 44) versehen sind, wobei jede der Metallisierungen (42, 44) über eine geeignete Anschlußleitung (46, 48) von außerhalb des Massendurchflußmessers her kontaktierbar ist.

7. Massendurchflußmesser nach einem der vorherigen Ansprüche, gekennzeichnet durch eine Schutzschicht (19), die auf die Elektrodenstruktur (18) und die Membranschicht (16) aufgebracht ist.

8. Verfahren zum Herstellen eines Massendurchflußmessers (10) mit den folgenden Schritten:
(a) Aufbringen einer Abstandsschicht (14) auf ein Substrat (12),
(b) Aufbringen einer Membranschicht (16) aus einem geeigneten dielektrischen Material auf die Abstandsschicht (14),
(c) Aufbringen einer Elektrodenstruktur (18) auf die Membranschicht (16),
(d) Entfernen der Abstandsschicht (14) in mindestens einem Bereich unterhalb der Elektrodenstruktur (18) durch selektives Ätzen der Abstandsschicht (14), wobei in diesem Bereich unter der Membranschicht (16) mindestens ein Hohlraum (26) ausgebildet wird und die Membranschicht (16) eine Membran (26) ausbildet, die den Hohlraum (26) überspannt,
wobei die Dicke d der Abstandsschicht (14) derart ist, daß die durch die Membranschicht (16) ausgebildete Membran (26) bei einer Durchbiegung an einer unteren Begrenzungsfläche des Hohlraums (26) anzuliegen kommt.

9. Verfahren nach Anspruch 8, dadurch gekennzeichnet, daß das Aufbringen der Abstandsschicht folgende Schritte umfaßt:
(a) Aufbringen einer Ätzstopschicht aus einem gegenüber dem selektiven Ätzen inerten Material;
(b) Entfernen des gegenüber dem selektiven Ätzen inerten Materials in dem Bereich unterhalb der zu erzeugenden Membran, wobei eine Ausnehmung in der Ätzstopschicht ausgebildet wird;
(c) Einbringen eines selektiv ätzbaren Materials in die Ausnehmung in der Ätzstopschicht.

10. Verfahren nach Anspruch 8 oder 9, dadurch gekennzeichnet, daß das Entfernen der Abstandsschicht (14) durch selektives Ätzen durch Ätzkanäle (28) erfolgt, die sich von der Abstandsschicht (14) durch die Membranschicht (16) hindurch bis an die Oberfläche des Massendurchflußmessers erstrecken.

11. Verfahren nach einem der Ansprüche 8 bis 10, dadurch gekennzeichnet, daß nach dem Entfernen der Abstandsschicht (14) der ausgebildete Hohlraum (26) evakuiert und abgedichtet wird.

12. Verfahren nach einem der Ansprüche 7 bis 9, dadurch gekennzeichnet, daß vor dem Aufbringen der Abstandsschicht (14) eine dritte Schicht (30) aus einem gegenüber dem selektiven Ätzen inerten Material auf das Substrat (12) aufgebracht wird.

13. Verfahren nach einem der Ansprüche 7 bis 10, dadurch gekennzeichnet, daß in dem Bereich, in dem die Abstandsschicht (14) entfernt wird, die Unterseite der Membranschicht (16) und die Oberseite des Substrats (12) bzw. der dritten Schicht (30) mit einer Metallisierung (42, 44) versehen werden, wobei jede der Metallisierungen (42, 44) über eine geeignete Anschlußleitung (46, 48) von außerhalb des Massendurchflußmessers her kontaktierbar ist.
